# EUROPEAN PATENT SPECIFICATION

(11) **EP 4 033 421 B1**
(45) Date of publication and mention of the grant of the patent: **10.04.2024**
(21) Application number: 22153218.7
(22) Date of filing: 25.01.2022
(51) Int. Cl.: G06Q 10/20, G06F 11/34, G06N 20/00, G05B 23/02

(54) **METHOD AND SYSTEM FOR PREDICTING A FAILURE OF A MONITORED ENTITY**
VERFAHREN UND SYSTEM ZUR VORHERSAGE EINES AUSFALLS EINER ÜBERWACHTEN EINRICHTUNG
MÉTHODE ET SYSTÈME POUR PRÉDIRE UNE DÉFAILLANCE D'UNE ENTITÉ SURVEILLÉE

(30) Priority: 26.01.2021 IT 202100001424
(43) Date of publication of application: 27.07.2022
(73) Proprietor: Arisk S.p.A., 20123 Milano (IT)
(72) Inventor: PERBOLI, Guido, I-20123 Milan (IT)
(74) Representative: Di Bernardo, Antonio

(56) References cited:
- CA-A1- 3 098 457
- US-A1- 2020 311 559
- US-A1- 2020 311 597

## Description

### TECHNICAL FIELD

The present invention relates to the sector of computer systems. In detail, the present invention relates to a method and system for predicting the failure of a monitored entity.

### BACKGROUND

Highly complex systems are implemented in various business sectors, each of which is subdivided into a plurality of units, which in turn are subdivided into a plurality of components. Examples of such complex systems comprise industrial production facilities, public transport systems, telecommunication networks, computer networks, data centres, *etc.*

The complexity of these systems makes it extremely difficult and laborious to check and verify the status of the various units and components that make up each system. As a result, periodic maintenance operations are often implemented irrespective of the actual need therefor and/or the systems are implemented with considerable redundancy to prevent the malfunction of a critical component from compromising the entire system. As is evident, these solutions only partially limit the aforementioned disadvantages and lead to a substantial increase in the cost of producing and operating these systems, as well as their complexity.

In an attempt to solve these problems in the art, methods have been proposed based on an automatic analysis of complex systems, in particular based on artificial intelligence, in order to predict a possible malfunction of the same.

For example, WO 2019/125445 and US 6,125,105 propose artificial intelligence-based methods intended to predict malfunctions in a network of computer systems, in particular with regard to the exchange of data among network elements.

US 2013/132001 and US 2012/025997, on the other hand, propose artificial intelligence-based methods intended to predict the malfunction of mechanical or electromechanical apparatuses. US 2020/311559 describes an edge computing device that performs training and inference of a decision tree algorithm, based on training data and inference data, the device including a plurality of sensors and an AI accelerator which is used to detect or predict failures associated with the edge device based on sensor data captured by sensors.

In addition, artificial intelligence-based methods are known which are intended to predict situations of malfunction of complex systems not only influenced by mechanical and/or electrical factors, but also by economic/social factors. For example, JP 2020/095583 describes an artificial intelligence-based method intended to provide a prediction of a probability of bankruptcy of a company.

The Applicant has observed that the proposed methods, although based on robust artificial intelligence algorithms, are strongly influenced by the composition of the data used during the training of the artificial intelligence algorithms.

In particular, the Applicant has found that the known training data processing techniques do not allow for the definition of an optimal training data set, with a consequent negative effect on the quality of the operating predictions generated by the known systems.

This problem is exacerbated in the case in which a large quantity of non-uniform data is available, i.e. a dataset where a set of data that are referred to one or more objects to be classified is numerically much smaller than another set of data that is referred to one or more other types of objects to be classified. An example of a highly unbalanced dataset is a dataset that comprises a quantity of information relating to electronic, mechanical or electromechanical devices, where a first part of these devices has malfunctioned and a second part - much larger than the first part - of these devices has not malfunctioned. Another example of a highly unbalanced dataset comprises a first quantity of information on subjects affected by a disease to be identified by means of artificial intelligence and a second quantity - much greater than the first quantity - of information relating to healthy subjects or those affected by a different disease.

It is known in the industry to use automatic upscaling algorithms, i.e. algorithms that artificially create new data sets of the subsample present in lower numerosity, or by downscaling the majority set, i.e. algorithms that artificially create new data sets of the subsample present in the majority numerosity.

However, the algorithms appear to have a limited effectiveness in creating training datasets. In particular, known algorithms have reduced effectiveness when the features that the artificial intelligence algorithm must identify are composed of data from the dataset that are at least partially correlated with each other.

Under these conditions, known upscaling algorithms lead to the creation of artificial datasets that do not correspond to real conditions and are therefore not usable for training an artificial intelligence algorithm correctly.

The known downscaling algorithms provide for randomly sampling the set with larger size, trying to obtain a subsample representative of the starting set - i.e., a downscaling is performed on a statistical basis. However, an extensive check of the dataset thus obtained by specialised personnel is necessary in order to verify the usability of the dataset.

### OBJECTS AND SUMMARY OF THE INVENTION

An object of the present invention is to overcome the drawbacks of the prior art.

In particular, the object of the present invention is to propose a method and system for predicting a malfunction capable of automatically creating an optimal set of training data to train an artificial intelligence algorithm used for predicting the malfunction starting from a set of available data.

Furthermore, it is a specific object of the present invention to propose a method and system for predicting a malfunction capable of automatically creating an optimal set of training data starting from a highly unbalanced data set comprising potentially correlated parameters, with unknown correlation function, and therefore not incorporable in upscaling for the generation of new synthetic data or in downscaling to obtain a sampling representative of the entire dataset.

A further object of the present invention is to provide a method and a related system for predicting an optimised malfunction thanks to the use of the optimal data set for training an artificial intelligence algorithm.

A further object of the present invention is to propose a method and system for predicting a malfunction capable of providing reliable malfunction predictions over a plurality of future time periods.

These and other objects of the present invention are achieved by a system incorporating the features of the appended claims, which form an integral part of the present description.

According to a first aspect, the present invention is directed to a method for predicting a malfunction of an entity. In particular, the entity is characterized by a plurality of parameters. Moreover, at least some of these parameters are potentially correlated with each other, with unknown correlation function.

The method comprises predicting a malfunction of the entity by means of an artificial intelligence system which is provided with data relating to the parameters of the entity, wherein the artificial intelligence system is trained by means of a training dataset based on a plurality of training entity data.

Advantageously, the training dataset is determined according to the following steps:
a. acquiring a training data set, wherein the training data set comprises a plurality of entity data groups, each entity data group comprising values referred to characteristic parameters of a respective training entity,
b. by means of the untrained artificial intelligence system, identifying data groups associated with training entities subject to a malfunction, and data groups associated with entities not subject to a malfunction;
c. by means of the untrained artificial intelligence system, composing a training subset, wherein the subset comprises a first quantity of data groups associated with the entities subject to malfunction, and a second quantity of data groups associated with entities not subject to a malfunction, the second quantity being greater than or equal to the first quantity,
d. using the training subset to train the artificial intelligence system,
e. by means of the artificial intelligence system trained with the training subset, analysing the entire training data set to determine a probability with which each training entity is subject to malfunction,
f. by means of the artificial intelligence system trained with the training subset, determining a distribution of the probabilities of malfunction of the training entities of the training data set,
g. composing the training dataset by selecting:
   - all data groups of training entities with a failure probability higher than a threshold value, and
   - a plurality of data groups of training entities with a failure probability lower than the threshold value, wherein for each failure probability lower than the threshold value said plurality of data groups comprises a respective quantity of data groups, function of the distribution of said probability.

In this description, the expression "training entity of the training data set" means one (or more, as the case may be) training entity of which at least one respective data group of training entity is included in the training data set.

The method according to the present invention makes it possible to train an artificial intelligence in an optimal manner regardless of the structure of the dataset available for training. The method according to the embodiments of the present invention allows a balanced dataset to be created automatically, using the same artificial intelligence system to be trained by means of the dataset itself. In particular, the method according to the present invention makes it possible to obtain an optimal balanced database starting from a strongly unbalanced dataset. Finally, the method is particularly effective in the case of datasets comprising parameters or features correlated with each other, but whose correlation function is not known analytically.

By means of the method of the present invention, the same artificial intelligence system is used as a means for learning which information included in a dataset, in particular in the case of an unbalanced dataset, can be eliminated or is to be maintained in a process of reduction or downscaling and, thus, for generating an optimal training dataset. The Applicant has determined that an improvement in the overall accuracy of the artificial intelligence system can be achieved by using the dataset created through the method compared to the case in which algorithms such as oversampling or cost-sensitive learning are used.

In other words, the proposed method allows to effectively automate the downscaling process, waiving the need for an accurate check of the new dataset performed by experts or, essentially reducing the scope of the check required to the common verification of the confidence achieved by the prediction provided by the system.

Thanks to this solution, a substantial saving in terms of time and costs is achieved, as the artificial intelligence system allows defining the training dataset much faster than through a known downsampling process followed by a human supervision step. Furthermore, the method according to the invention makes it possible to automate and standardise the process of creating datasets.

This training through an optimised dataset allows to improve the performances in terms of accuracy of the final artificial intelligence system - i.e. downstream of the training - obtaining predictions of malfunctions characterized by high confidence.

In one embodiment, step g. of composing the training dataset by selecting a plurality of data groups of training entities with a failure probability lower than the threshold value, comprises:
- randomly selecting the plurality of data groups of training entities with a failure probability lower than the threshold value among the totality of the data groups of training entities with a failure probability lower than the determined threshold value.

In one embodiment, step g. of composing the training dataset by selecting a plurality of data groups of training entities with a failure probability lower than the threshold value, comprises:
- selecting a further threshold value of the failure probability, said further threshold value being lower than the threshold value,
- selecting a first quantity of data groups associated with entities having a failure probability lower than the further threshold value, and
- selecting a second quantity of data groups associated with entities having a failure probability comprised between the further threshold value and the threshold value.

Preferably, said second quantity is lower than the first quantity by a factor m comprised between 0.2 and 0.6.

This makes it possible to obtain balanced training data starting from a strongly unbalanced training data set quickly and efficiently.

In one embodiment, the plurality of data groups of training entities with a failure probability lower than the selected threshold value is equal to or greater than the totality of the data groups of training entities with a failure probability higher than a threshold value.

Preferably, the plurality of data groups of training entities with a failure probability lower than the selected threshold value is comprised between one and four times the totality of the data groups of training entities with a failure probability higher than a threshold value.

This ratio between data groups of entities subject to malfunction and entities not subject to malfunction allows to obtain an optimal composition of the training dataset.

In one embodiment, the step of determining a distribution of the probabilities of malfunction of the training entities of the training set comprises:
i. defining a plurality of probability threshold values;
ii. determining at least one between a number and a list of training entities of the training data set whose probability of malfunction is lower than or equal to a selected threshold value, by executing the artificial intelligence system,
iii. selecting a new probability threshold value of said plurality of probability threshold values,
iv. iterating steps i - iii, until all probability threshold values have been selected, and
v. calculating the distribution of the probabilities of malfunction of the training entities of the training set based on the results provided at each iteration of step ii.

In one embodiment, the step of determining a distribution of the probabilities of malfunction comprises:
- calculating a plurality of distributions of the probabilities of malfunction of the training entities of the training set, wherein each distribution of the probabilities of malfunction of the training entities of the training set is calculated by means of data groups of the training entities referred to the same time interval.

Furthermore, the step of determining the training data comprises:
- selecting the entity data of a second subset of training entities of the training data set such that the second subset of training entities present has a plurality of distributions of the probabilities of malfunction equal to the plurality of distributions of the probabilities of malfunction calculated for the training entities of the training data set.

The Applicant has determined that the above proposed methodology makes it possible to determine the probability distribution of failure of the set in a particularly effective manner.

In this way, it is possible to achieve an initial reduction of an unbalanced training data set that allows to train the artificial intelligence system in a functional way.

In one embodiment, the step of predicting a malfunction of the entity by means of an artificial intelligence system comprises using a machine learning algorithm, selected from:
- Random Forest,
- XGBoost;
- Logistic Regression, and
- a neuronal network.

The Applicant has determined that these machine learning algorithms, in particular the Random Forest algorithm, allow to obtain optimal performances.

For example, the Random Forest algorithm allows to obtain results characterized by an AUC (acronym for Area Under Curve, ROC, acronym for Receiver Operating Characteristic) factor comprised between 88% and 93%.

In one embodiment, the step of predicting a malfunction of the entity by means of an artificial intelligence system comprises receiving a data group referred to the entity at the input of the artificial intelligence system and calculating a plurality of probability of malfunction of the entity, each probability of malfunction of the entity referred to a respective future time interval.

The malfunction predictions provided by the system are highly reliable even over very long future periods of time, for example comprised between one and five years.

A different aspect of the present invention concerns a system for predicting a malfunction of an entity. In particular, the entity is characterized by a plurality of parameters, the system comprising:
- an interface module configured to receive data relating to said entity and providing a malfunction prediction result;
- a data processing module configured to acquire and process data relating to training entities and the data relating to said entity provided to the interface module, and
- an artificial intelligence module configured to execute an artificial intelligence algorithm using the data processed by the data processing module to predict a probability of malfunction of the entity.

Advantageously, the modules of the system are configured to implement the method according to any one of the preceding claims.

Further features and advantages of the present invention will be more evident from the description of the accompanying drawings.

### BRIEF DESCRIPTION OF THE DRAWINGS

The invention is described hereinbelow with reference to certain examples provided by way of non-limiting example and illustrated in the accompanying drawings. These drawings illustrate different aspects and embodiments of the present invention and reference numerals illustrating structures, components, materials and/or similar elements in different drawings are indicated by similar reference numerals, where appropriate.
Figure 1 is a block diagram of a malfunction prediction system according to an embodiment of the present invention arranged to provide one or more malfunction predictions of a monitored entity;

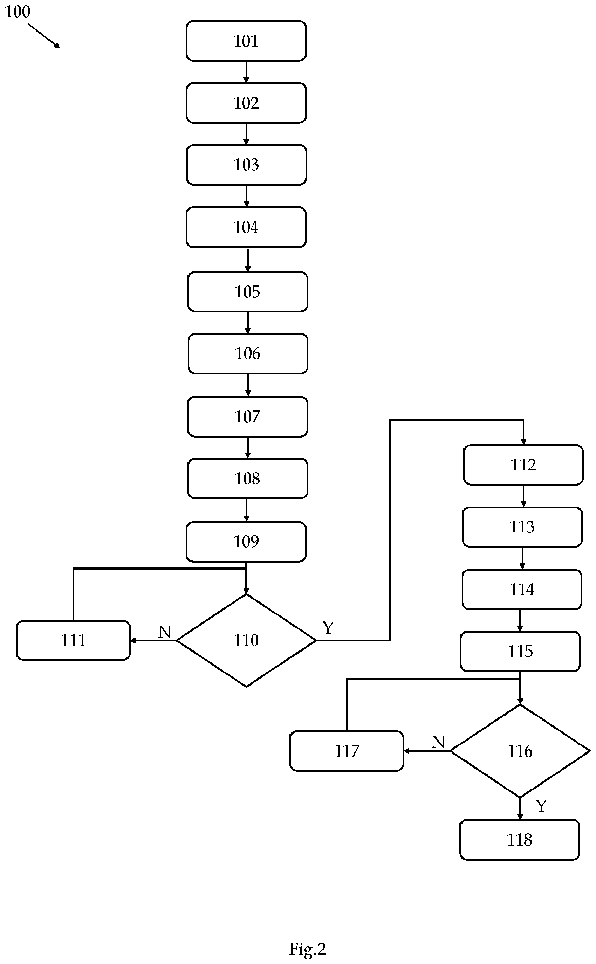

Figure 2 is a flow diagram of a training procedure implemented by the malfunction prediction system of Figure 1;
Figure 3 is a qualitative graph of a malfunction probability distribution calculated by the malfunction prediction system of Figure 1, and
Figure 4 is a flow diagram of a malfunction prediction procedure implemented by the malfunction prediction system of Figure 1.

### DETAILED DESCRIPTION OF THE INVENTION

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "includes" means "includes, but not limited to" unless otherwise indicated.

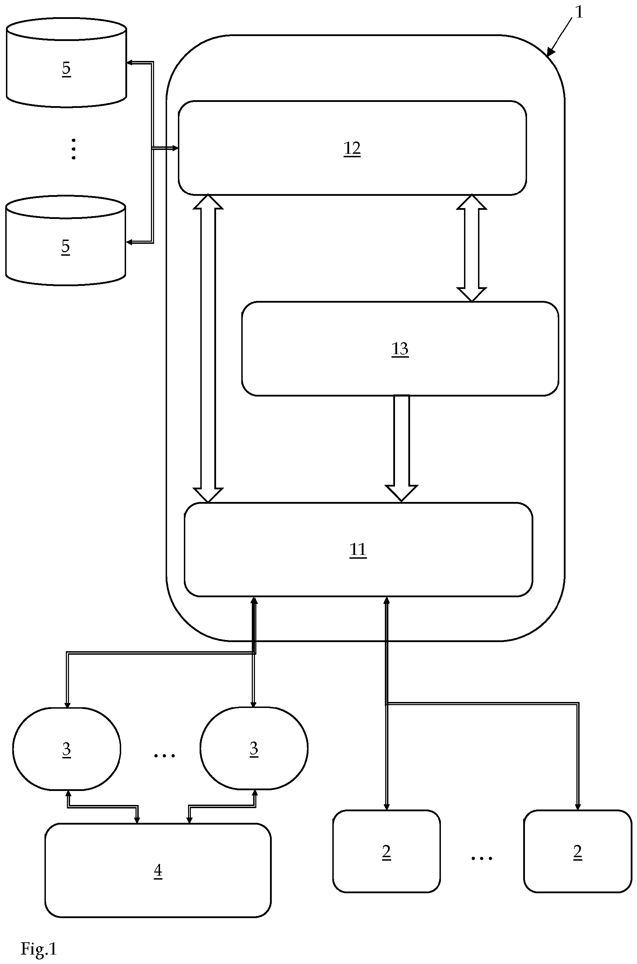

With reference to Figure 1, a malfunction prediction system based on artificial intelligence according to an embodiment of the present invention - referred to as 'system 1' in the following, for the sake of brevity - comprises an interface module 11, a data processing module 12 and an artificial intelligence module 13, connected together to exchange data - for example, in binary format.

The interface module 11 is connected to one or more user devices 2 (e.g., computers or computer systems) in order to exchange data with them. Furthermore, the interface module 11 is connected to one or more sensors 3. In particular, each sensor 3 is configured to provide a measurement of a physical magnitude associated with the operation of a monitored entity 4.

For this purpose, the interface module 11 comprises necessary hardware resources, such as one or more processors, volatile memories, non-volatile memories, modems, etc.

For example, the monitored entity 4 is an industrial plant comprising a plurality of automated processing stations. In such a case, the sensors 3 may comprise one or more of temperature sensors, pressure sensors, weight sensors, cameras, thermal imaging cameras, voltage and/or current sensors, flow sensors, *etc.,* according to the type of industrial plant and/or the processing stations included therein. In addition, the sensors 3 may comprise processing devices such as PLCs, microcomputers, microcontrollers, *etc.* In such a case, the processing devices are configured to provide operating information of the industrial plant and/or the processing station thereof to which they are connected - for example, production volume, uptime of the components included in the processing stations, *etc.*

The interface module 11 is configured to supply the data received from the user devices 2 and from the sensors 3 to the data processing module 12. Furthermore, the interface module 11 is connected to the artificial intelligence module 13 to exchange data with it. Advantageously, the interface module 11 is configured to transmit to the artificial intelligence module 13 prediction requests received from a user device 2 and/or input data to be used for predictions as described below. In addition, the interface module 13 is configured to receive output data generated by the artificial intelligence module 12 to be forwarded to one or more corresponding user devices 2.

The data processing module 12 is connected to one or more databases 5, or more generally data sources, in order to exchange data with them. In particular, the databases 5 comprise a plurality of entity data DB. Each entity data DB comprises values of a plurality of characteristic parameters of a respective entity (not illustrated).

The data processing module 12 is configured to receive, combine and process the data acquired from the databases 5 and from the interface module 11, so that they can be used adequately by the artificial intelligence module 13 in order to provide a malfunction prediction. For this purpose, the data processing module 12 comprises necessary hardware resources, such as one or more processors (CPU), graphics processors (GPU), signal processors (DSP), volatile memories, non-volatile memories, modems, etc.

The artificial intelligence module 13 is configured to process data processed by the processor module 12 and/or provided by the interface module 11 in order to predict a probability of malfunction of the monitored entity 4. The artificial intelligence module 13 is configured to execute an AI artificial intelligence algorithm, preferably, a machine learning (ML) algorithm. In a preferred embodiment of the present invention, the artificial intelligence module 13 is configured to execute the machine learning algorithm, preferably, a random forest algorithm.

For this purpose, the artificial intelligence module 13 comprises necessary hardware resources, such as one or more processors (CPU), graphics processors (GPU), signal processors (DSP), volatile memories, non-volatile memories, modems, etc.

The system 1 just described is configured to perform a method for predicting a malfunction of an entity according to an embodiment of the present invention.

In particular, the method comprises a learning procedure 100 and a prediction procedure 200.

The purpose of the learning procedure 100 is to train the AI artificial intelligence algorithm in order to make reliable malfunction predictions.

In detail, the learning procedure 100 comprises acquiring a set of entity data DB referred to training entities from the databases 5 (block 101). Each training entity has characteristics and a purpose that are substantially corresponding to, or at least comparable with, the characteristics and purpose of the monitored entity 4. For example, the training entities are industrial plants that produce the same, or similar, finished or semi-finished product as the finished or semi-finished product produced by the industrial plant corresponding to the monitored entity 4.

Advantageously, the acquired training entity data refer both to training entities which have undergone a malfunction and training entities which have not undergone a malfunction. At least one entity data group is acquired for each training entity. Preferably, for each entity, entity data groups referred to two or more predetermined time intervals are acquired - for example, five entity data groups referred to the operation of the training entity during five consecutive years, ten data referred to as many periods of operation of the training entity separated by a period of standstill, *etc.*

Advantageously, each entity data group comprises values referred to characteristic parameters of the respective training entity, both time variants and time invariants. For example, time-independent parameters comprise structural parameters (size, weight, list of the stations and/or components, etc.) and nominal parameters (maximum absorbed/generated power, maximum frequency of operation, maximum load, MTBF of one or more components of the plant and/or of the stations of the plant, *etc*.). In contrast, the time-dependent parameters comprise operating parameters of the training entity (instantaneous power absorbed, revolutions per minute of a mechanical/electromechanical component, quantity of input raw material, quantity of output finished or semi-finished product, *etc*.). In particular, the time-dependent parameters may comprise a plurality of values acquired at different instants of time, a trend in the value of the parameters over said time interval, a variation in the value of the parameters between two or more instants of time, and/or similar information.

It will be noted that the data groups are then identified, or labelled, based on whether the corresponding training entity is subject to a malfunction or not.

The acquired entity data DB are made uniform between them (block 102). In particular, the entity data are processed so that each entity data group comprises values referred to the same characteristic parameters of the training entity.

For example, a missing value imputation operation is performed as described in Barnard, J., Meng, X.-L., 1999: "Applications of multiple imputation in medical studies: from aids to nhanes" Statistical methods in medical research 8 (1), 17-36, and a standardisation of the data set. Preferably, any missing value from an entity data is set to zero and a standard scaling operation is performed.

The standardised entity data DB are then analysed and separated into master data, or core data, and secondary data, or non-core data (block 103). Preferably, the master data comprises entity data groups having values referred to the same parameters, so as to allow an adequate comparison among the corresponding entities. Otherwise, the secondary data collect data referred to parameters not contained in all entity data groups of the entity data set.

The secondary data are processed to generate perturbation data (block 104). In particular, the perturbation data represent an effect of the secondary data on the master data.

The master data are then divided into a training data set DT and a validation data set DV (block 105). The master data are divided so that the training data set DT is substantially larger than the validation data set DV. Preferably, the training data set DT comprises 80% of the entity data DB and then the validation data set DV comprises the remaining 20% of the entity data DB.

The training data set DT is then subjected to a feature reduction process (block 106). For example, the parameters for which the presence or absence does not change the precision of the results by a value greater than 1% when performing a classification operation are removed. Preferably, the feature reduction process is an iterative feature removal process.

Next, a subset of training entities associated with corresponding entity data groups of the training data set DT is selected (block 107). For example, downsizing of the training data set is performed by randomly sampling the training entities of the training data set DT in order to obtain a substantially reduced subset of training entities compared to the totality of training entities of the training data set DT.

Herein, the expression "training entity of the training data set DT" means a training entity of which at least one respective data group of training entities is comprised in the training data set DT.

Preferably, in the case of a highly unbalanced training data set, it is contemplated that the system 1 separately selects a subset of the training entities of the training data set DT that have not undergone a malfunction and a subset of the training entities of the training data set DT that have undergone a malfunction, in particular with different sizes, and then merged into a single subset of training entities. Preferably, the reduced subset of training entities is characterized by the proportion between the training entities that have undergone a malfunction and the training entities that have not undergone a malfunction is comprised between 1:5 and 1:1, preferably, equal to or less than 1:4.

The term "highly unbalanced training data set" means a training data set in which the training entities that have undergone a malfunction are 20% or less than the training entities that have not undergone a malfunction.

Generalizing, given an event to be predicted (target) that is classifiable by discrete prediction values (for example, a Boolean TRUE and FALSE value, or a finite sequence of probability values), there is a highly, or strongly, unbalanced set of data, or dataset, when the data associated with one of the values (for example, TRUE) is present in a much smaller numerosity than the other value.

In this case, the step in block 107, applies the artificial intelligence algorithm by performing an unsupervised statistical downscaling, i.e. extracting the entire set with a minority value (e.g. TRUE) and randomly sampling a subset of the entire subset present in majority numerosity (for example, FALSE), obtaining a smaller dataset. The new dataset must contain the possible values of the prediction in a commensurable ratio (e.g. a ratio of the values to be predicted of the minority set to the majority set of 1 to 4).

The training data associated with the selected training entity subset is used as the first subset of training data DT1 (block 108) and is used to train the AI artificial intelligence algorithm (block 109).

The AI artificial intelligence algorithm thus trained is subjected to evaluation (decision block 110). Specifically, the validation data set DV and the perturbation data are provided as input to the AI artificial intelligence algorithm and then the system 1 verifies the correspondence of the malfunction prediction for each training entity associated with the validation data DV. Preferably, it is verified that the malfunction predictions of the AI artificial intelligence algorithm are not affected by overfitting.

In case the validation detects the production of sub-optimal results (output branch N of block 110), the hyperparameters of the artificial intelligence algorithm are adjusted, if necessary, in order to optimise the accuracy and the recovery of the malfunction predictions provided by the artificial intelligence algorithm (block 111) and the validation step to verify that the AI artificial intelligence algorithm operates as desired is repeated. Preferably, the hyperparameters are adjusted by means of a grid-search approach - for example, in a manner similar to what is described in Bergstra, J., Bengio, Y., 2012: "Random search for hyper-parameter optimization", Journal of Machine Learning Research 13, 281-305.

Once the validation detects the production of acceptable results (output branch Y of block 110), it is provided for using the AI artificial intelligence algorithm to calculate a probability of malfunction of the training entities of the training data set DT (block 112).

The obtained predictor is applied to the overall DT (i.e. also to the discarded part of the downscaling) by extracting both the predictions and the relative prediction probabilities (they are provided by all classification systems).

In a preferred embodiment, the AI artificial intelligence algorithm is executed multiple times. At each iteration, the algorithm is configured to output a number and/or list of training entities of the data set DT whose probability of malfunction is lower than or equal to a respective threshold value.

For example, the AI artificial intelligence algorithm is executed to determine the training entities with a probability of malfunction equal to or lower than 20%, 30%, 40%, 50% and 60%. Preferably, the operation of calculating the probability of malfunction of the training entities of the training data set DT is performed for each time interval for which corresponding data groups of the training entities are present.

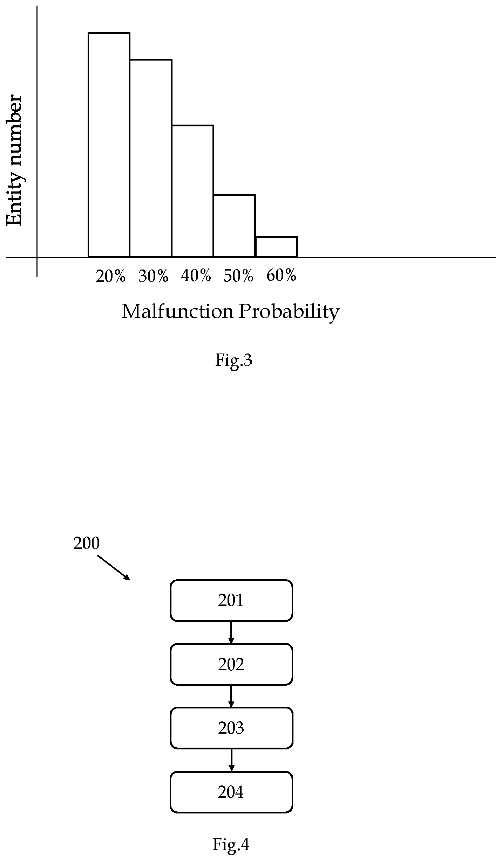

The results obtained from an iteration of the AI artificial intelligence algorithm or the combination of the results of the iterations of the AI artificial intelligence algorithm allow to obtain a distribution of the probability of malfunction of the training entities of the training data DT (block 113) (qualitatively illustrated in Figure 3). Preferably, a distribution of the probability of malfunction of the training entities of the training data DT is defined for each time interval for which corresponding data groups of the training entities are present.

Based on the malfunction probability distribution thus defined, a second subset of training data DT2 is selected starting from the training data DT (block 114). In particular, the second subset of training data DT2 comprises data referred to a subset of training entities of the training entities of the training set DT selected so that the subset of training entities has a malfunction probability distribution corresponding to the malfunction probability distribution of the totality of the training entities of the training set. Preferably, the second subset of training data DT2 is defined so that there is correspondence with each of the distributions of the probability of malfunction that are calculated for a respective time interval.

For example, in the case of malfunction prediction - that is, in which the prediction assumes a Boolean value or a minimum probability value - the creation of the second subset of training data DT2 indicated in block 114 comprises the following steps.

The entire training data set DT is evaluated by the AI artificial intelligence algorithm which categorises the training entities as either malfunctioning or non-malfunctioning. For example, a threshold malfunction probability (for example 60%) is selected from those calculated in block 112 based on which the AI artificial intelligence algorithm categorises a training entity as malfunctioning or non-malfunctioning by comparing the failure probability calculated for the entity with the threshold malfunction probability.

Next, the data groups relating to the entities in smaller quantity - the malfunctioning entities, in this case - are collected. In the following, the numerosity of these data groups is indicated with K, a positive integer.

Otherwise, a second numerosity J of data groups to be sampled is selected among the majority entities - that is, entities not subject to malfunctions - from the entire training data set DT. In particular, the Applicant has determined that optimal results are obtained by selecting the numerosity J of such a sample equal to nK (i.e., J = nK), where the coefficient n is preferably comprised between 1 and 4 (i.e., 1 ≤ n ≤ 4).

Preferably, mJ sample data groups associated with an entity with a probability of malfunction - predicted by the AI artificial intelligence algorithm - greater than a threshold value, e.g. p(s) > 0.5 - limit to have meaningful predictions, are extracted by a statistical method (e.g. a stratification). The Applicant has determined that optimal results are obtained by selecting the value of the coefficient m comprised between 0.2 and 0.6 (i.e., 0.2 ≤ m ≤ 0.6).

Furthermore, J-mJ sample data groups associated with an entity with a probability of malfunction - predicted by the AI artificial intelligence algorithm - comprised between 0.5 and p(s) are extracted by a statistical method (e.g. stratification).

Finally, the AI artificial intelligence algorithm creates a balanced dataset - that is, the second subset of training data DT2 - by combining the K data groups associated with malfunctioning entities and the J data groups associated with non-malfunctioning entities.

The AI artificial intelligence algorithm is subjected to a new training based on the second subset of training data DT2 (block 115).

In other words, through the steps just described, the AI artificial intelligence algorithm automatically creates a balanced training dataset that it uses to optimise its training by optimising its prediction capacity by reducing prediction errors compared to the training by downsampling with classical statistical methods.

At the end of the training, the AI artificial intelligence algorithm is again subjected to evaluation (decision block 116) and adjustment of the hyperparameters (block 117) in case the production of sub-optimal results is detected (output branch N of block 116), in a manner similar to that described above.

The training procedure 100 (output branch Y of block 116) ends with the system 1 making itself available to receive requests for predicting malfunction of the monitored entity 4 that are performed by means of a user device 2 (block 118).

The prediction procedure 200 (to which the flow diagram of Figure 4 refers) initially comprises the acquisition of a plurality of operational data DE relating to the monitored entity 4 (block 201). In particular, the operational data DE are acquired via the sensors 3 and/or the user device 2.

Advantageously, the operational data DE comprise values relating to characteristic parameters of the monitored entity that are time-independent and/or relating to characteristic parameters of the monitored entity which are time-dependent in a manner similar to what has been described above with respect to the entity data DB.

The acquired operational data DE are then analysed and separated into master data, or core data, and secondary data, or non-core data (block 202). Preferably, the master data comprises a subset of operational data DE corresponding to training data DT used during a training method described hereinafter. Otherwise, the secondary data comprises a subset of the operational data DE which do not correspond to the training data DT.

For example, the data processing module 12 comprises a discrimination unit 121 configured to analyse and separate the operational data DE into master data and secondary data.

The secondary data are processed to generate perturbation data (block 203). For example, the data processing module 12 comprises a perturbation unit 122 configured to receive secondary data as input and generate corresponding perturbation data as output.

The master data and the perturbation data are provided as input to the artificial intelligence algorithm executed by the artificial intelligence module. The artificial intelligence algorithm provides a malfunction prediction PM of the monitored entity 4 (block 204).

Preferably, the malfunction prediction comprises at least a probability that the entity, or a component thereof, will undergo a malfunction within a future time interval starting from the acquisition of the operational data DE of the monitored entity 4.

In a preferred embodiment, the artificial intelligence algorithm is configured to provide a sequence of malfunction predictions PM₁₋ₙ referred to consecutive time intervals. For example, it generates an associated malfunction probability for two or more time intervals selected from 6 months, 12 months, 24 months, 36 months, 48 months, 60 months starting from the acquisition of the operational data DE of the monitored entity 4.

Furthermore, the artificial intelligence algorithm generates an indication of one or more characteristic parameters of the monitored entity 4 that are the most relevant results in the calculation of the probability of malfunction for each time interval considered.

However, it is clear that the above examples must not be interpreted in a limiting sense and the invention thus conceived is susceptible of numerous modifications and variations.

For example, in alternative embodiments (not illustrated), the operational data relating to the entity to be monitored are provided to the system 1 solely via one or more user devices 2 connected to the interface module 11 of the system 1. In this case, the measurements provided by the sensors 3 are received by the user devices or, alternatively, no sensors 3 are provided to perform an automatic measurement of the parameters of the monitored entity 4, but the parameters are determined based on indirect measurements/observations.

There is nothing to prevent the interface module 11, the data processing module 12 and/or the artificial intelligence module 13 from being implemented as a single module.

It will be evident to the person skilled in the art that the interface module 11, the data processing module 12 and/or the artificial intelligence module 13 can be implemented through both dedicated hardware resources and shared hardware resources. Again, one or more modules can be realized, at least in part, by means of virtual machines.

Although the preferred machine learning algorithm is of the Random Forest type, there is nothing to prevent the artificial intelligence module from being configured to implement a different algorithm. In particular, in alternative embodiments (not illustrated), the artificial intelligence module is configured to execute an algorithm of the XGBoost, Logistic Regression or a neuronal network (NN) type.

As will be evident to the person skilled in the art, one or more steps of the procedures 100 and 200 described above can be carried out in parallel with each other or in a different order from the one presented above. Similarly, one or more optional steps can be added or removed from one or more of the procedures described above.

For example, in alternative embodiments (not illustrated), data standardisation and the separation of data into training set and validation set are performed in reverse order.

In one embodiment (not illustrated), the step of feature reduction in the training procedure is omitted. In addition or alternatively, the conversion of the secondary data into perturbation data can be omitted in the prediction procedure.

Again, nothing prevents the validation steps and/or the hyperparameter adjustment steps from being omitted.

In an alternative embodiment (not illustrated), it is envisaged to redefine a plurality of training data subsets with which to sequentially train the artificial intelligence algorithm in order to determine a final training data set. In detail, once the training of the AI artificial intelligence by means of the first training data subset is completed, the AI artificial intelligence algorithm is executed to process the data of the training set DT in order to determine the training entities with a probability of malfunction equal to or lower than a first threshold - for example, 20%. Subsequently, it is provided for selecting a new subset of training entities, consisting of a sampling of entities comprised between the training entities with a probability of malfunction equal to or lower than the first threshold and the training entities that have undergone a malfunction. The AI artificial intelligence algorithm is trained with the new training data subset and then executed to process the data of the training set DT to determine the training entities with a probability of malfunction equal to or lower than a second threshold - for example, 30%. The steps just described are iterated each time to identify training entities with a probability equal to or lower than a threshold greater than the previous one - e.g., three more iterations with thresholds equal to 40%, 50% and 60%, respectively - until the number of training entities identified has a significant value - e.g., a threshold beyond which the system degrades strongly like beyond 70% in the example of the iterations considered above. The results of the previous steps are used to determine the malfunction probability distribution of the training entities of the training data set DT and to determine the definitive training data subset in a manner analogous to what is described above.

As will be evident in the case of a highly unbalanced training data set, i.e. comprising a group of training entities of the training data set that have undergone a malfunction much lower than a group of training entities of the training data set that have not undergone a malfunction - for example, in which the training entities of the first group are 5% or lower than the training entities of the second group - the weight of the first group of training entities on the distribution of the probability of malfunction of the training data set is negligible.

Consequently, the step of determining the distribution of the probabilities of malfunction of the training entities of the training set DT (block 112 of procedure 100) can be implemented by determining the distribution of the probabilities of malfunction of the training entities of the second group of entities only - i.e., which have not undergone a failure. Consequently, the step of determining a distribution of the probability of malfunction of the training entities of the training data DT (block 113) comprises selecting a third subset of training entities SDT3 of the second group - i.e., all entities that did not undergo a malfunction - such that the third subset of training entities has a distribution of the probabilities of malfunction equal to the distribution of the probability of malfunction of the training entities of the training data DT. Finally, the second subset of training entities SDT2 of the training data set DT is, therefore, defined as the union of the training entities of the first group and of the third subset of training entities SDT3.

In a further embodiment (not illustrated), it is provided to repeat the training procedure 100. For example, the training procedure 100 may be reiterated after a predetermined period of time (such as one year) has elapsed since the previous iteration thereof, acquiring new entity data from the databases.

As will be evident, the combination of the procedures 100 and 200 presented above forms an overall method for predicting the malfunction of a monitored entity according to the present invention.

Naturally, all the details can be replaced with other technically-equivalent elements.

Furthermore, although reference has been made in the description to a monitored entity corresponding to an industrial plant, it will be apparent to a person skilled in the art that the method and the system described above may be adapted to provide predictions relating to different entities without requiring substantial modifications to the method and system according to the present invention.

For example, in one embodiment, the method and the system are configured to provide predictions of malfunction of a computer system, such as a data centre, in which case the parameters comprise parameters relating to the installed hardware resources, parameters relating to the operation of said hardware resources, parameters relating to the building in which the data centre is located, parameters relating to an HVAC system that regulates the temperature of the data centre, parameters relating to the operation of said HVAC system, *etc.*

Again, the method and the system are configured to provide predictions of malfunction, i.e. failure, of a legal entity, in particular a company. In this case, the system 1 is connected to databases 5, including public financial ones - for example, databases of the chambers of commerce or similar entities in the country where the monitored entity is operating - and private databases - e.g. the AIDA database.

Data relating to failed and not failed companies with similar characteristics to the monitored entity - for example, in terms of business sector and turnover - are extracted from the databases 5. In particular, a predetermined number of fiscal years are acquired - for example, the last five fiscal years of entities. Preferably, companies for which a number of official financial reports greater than or equal to a threshold number - for example, equal to five - are not available are discarded from the data set.

The set of data thus acquired are then divided into master data and secondary data as described above. The master data are then processed to standardise the data set and a feature reduction is performed, in the same way as described above.

The secondary data is processed to generate perturbations to be provided as input to the artificial intelligence algorithm. In this case, the secondary data are processed according to a tree taxonomy based on the SHELL model (Software, Hardware, Environment, Liveware People and Liveware Environment) as described in Cantamessa, M., Gatteschi, V., Perboli, G., Rosano, M., 2018: "Startups' Roads to Failure", Sustainability 10 (7), 2346. In particular, the result of this processing is processed by means of a set of rules that map the effect of the processing results on the master data and create a risk impact matrix which is provided as input to the artificial intelligence algorithm.

The set of training entity data derived from the master data is highly unbalanced, in particular the number of the not failed companies is substantially greater than the number of failed companies - for example, the number of not failed companies is greater than two orders of magnitude than the number of failed companies. The data set is sampled as described above. In one embodiment, it is envisaged to sample only the not failed companies and keep the totality of the failed companies or, alternatively, it is envisaged to define a ratio between not failed companies and failed companies comprised between 5 and 1, more preferably between 3 and 1.

Similarly to what has been described above, the artificial intelligence algorithm is trained with the training data subset and with the perturbation data, validated and possibly the hyperparameters are adjusted.

After that, the entire training data set is processed by the artificial intelligence algorithm in a similar way as described above. At the end of the processing by the artificial intelligence algorithm, there is a failure probability for each of the companies in the training set for each time interval considered, for example for each of the five years.

As described above, the probabilities of failure are combined to obtain a probability distribution of failure for each time interval considered. Consequently, a new training data subset is generated comprising training data associated with a new sample of companies of the training set which are selected so as to have a probability distribution of failure during each time interval equal to the corresponding probability distribution of failure for each time interval of the companies of the training set.

The artificial intelligence algorithm is then trained with the new validated training data subset and eventually the hyperparameters are adjusted, completing the system training procedure.

During the prediction procedure, through the user device it is possible to request a prediction from the system on the failure probability of a monitored company. In particular, it is envisaged to receive company data as input and, preferably, a risk matrix relating to the company directly through the user device. In addition, the sensors are omitted or replaced by a link to a computer system capable of providing financial and/or productivity information of the monitored company - for example, a real-time trend of a stock market listing of the company, its customers and/or affiliated companies, and/or a stock market trend of the goods produced or traded by the monitored company.

Similarly to what has been described above, the input data is divided into master data and secondary data, with the secondary data being processed to generate corresponding perturbations that are provided as input to the artificial intelligence algorithm together with the master data.

The main intelligence algorithm then outputs a prediction of failure associated with the monitored company referred to a plurality of future time periods. In one embodiment of the present invention, five predictions of failure are provided, which comprise a failure probability of the company at 12 months, 24 months, 36 months, 48 months and 60 months, from the prediction request. Preferably, together with the failure prediction, one or more performance indicators relating to national and international regulations are also provided - for example the Altman z-score and/or Italian business crisis alert indices (defined in the Corporate Crisis and Insolvency Code - Legislative Decree 14/2019).

In a preferred embodiment, the failure predictions and the input data are further processed in order to identify the parameters which have the greatest impact on the failure probability of the monitored company.

Finally, the probability prediction and the identified critical parameters are combined into an output report that is provided to the user device that performed the request.

## Claims

1. Method (100, 200) for predicting a malfunction of an entity (4), said entity (4) being **characterized by** a plurality of parameters, the method (100, 200) providing for:
predicting (200) a malfunction of the entity (4) by means of an artificial intelligence system (1) comprising an artificial intelligence algorithm, which is provided with data relating to the parameters of the entity (4), wherein the artificial intelligence system (1) is trained by means of a training dataset based on a plurality of training entity data associated with a corresponding plurality of training entities,
**characterized in that**
the artificial intelligence system (1) selects the training dataset by implementing the following steps:
a. acquiring (101-106) the plurality of training entity data, wherein the plurality of training entity data comprises a plurality of entity data groups, each entity data group comprising data values referred to characteristic parameters of a respective training entity, and wherein the plurality of training entities comprise a number of training entities subject to a malfunction that are equal to, or less than, 20% of the number of training entities not subject to a malfunction;
b. by means of the untrained artificial intelligence algorithm, identifying training entities subject to a malfunction, and training entities not subject to a malfunction;
c. composing (107) a training subset by selecting a first quantity of data groups associated with the entities subject to malfunction, and a second quantity of data groups associated with entities not subject to a malfunction, the second quantity being greater than or equal to the first quantity,
d. using the training subset to train (109) the artificial intelligence algorithm,
e. by means of the trained artificial intelligence algorithm, determining (112) a probability with which each training entity is subject to malfunction of the training entities associated with data groups of the training subset,
f. determining (113) a distribution of the probabilities of malfunction of the training entities associated with data groups of the training data set,
g. composing (114) the training dataset by selecting:
- all data groups of training entities with a failure probability higher than a threshold value, and
- a plurality of data groups of training entities with a failure probability lower than the threshold value, wherein for each failure probability lower than the threshold value said plurality of data groups comprises a respective quantity of data groups, which is a function of the distribution of said probability.

2. Method (100; 200) according to claim 1, wherein step g. of composing (113) the training dataset by selecting a plurality of data groups of training entities with a failure probability lower than the threshold value, provides for:
- randomly selecting the plurality of data groups of training entities with a failure probability lower than the threshold value among the totality of the data groups of training entities with a failure probability lower than the determined threshold value.

3. Method (100; 200) according to claim 1 or 2, wherein step g. of composing (113) the training dataset by selecting a plurality of data groups of training entities with a failure probability lower than the threshold value, provides for:
- selecting a further threshold value of the failure probability, said further threshold value being lower than the threshold value,
- selecting a first quantity of data groups associated with entities having a failure probability lower than the further threshold value, and
- selecting a second quantity of data groups associated with entities having a failure probability comprised between the further threshold value and the threshold value.

4. Method (100; 200) according to claim 3, wherein said second quantity is lower than the first quantity by a factor m comprised between 0.2 and 0.6.

5. Method (100; 200) according to any one of the preceding claims wherein the plurality of data groups of training entities with a failure probability lower than the selected threshold value is equal to or greater than the totality of the data groups of training entities with a failure probability higher than a threshold value.

6. Method (100; 200) according to claim 5, wherein the plurality of data groups of training entities with a failure probability lower than the selected threshold value is comprised between one and four times the totality of the data groups of training entities with a failure probability higher than a threshold value.

7. Method (100; 200) according to any one of the preceding claims, wherein the step of determining (112) a distribution of the probabilities of malfunction of the training entities of the training set provides for:
i. defining a plurality of probability threshold values;
ii. determining at least one between a number and a list of training entities of the training data set whose probability of malfunction is lower than or equal to a selected threshold value, by executing the artificial intelligence system,
iii. selecting a new probability threshold value of said plurality of probability threshold values,
iv. iterating steps i - iii, until all probability threshold values have been selected, and
v. calculating the distribution of the probabilities of malfunction of the training entities of the training set based on the results provided at each iteration of step ii.

8. Method (100; 200) according to any one of the preceding claims, wherein the step of determining (112) a distribution of the probabilities of malfunction provides for:
- calculating a plurality of distributions of the probabilities of malfunction of the training entities of the training set, wherein each distribution of the probabilities of malfunction of the training entities of the training set is calculated by means of data groups of the training entities referred to the same time interval, and
wherein the step of determining (113) the training data provides for:
- selecting the entity data of a second subset of training entities of the training data set such that the second subset of training entities present has a plurality of distributions of the probabilities of malfunction equal to the plurality of distributions of the probabilities of malfunction calculated for the training entities of the training data set.

9. Method (100; 200) according to any one of the preceding claims, wherein the step of predicting (200) a malfunction of the entity (4) by means of an artificial intelligence system (1) provides for using a machine learning algorithm, selected among:
- Random Forest,
- XGBoost;
- Logistic Regression, and
- a neuronal network.

10. Method (100;200) according to any one of the preceding claims, wherein the step of predicting (200) a malfunction of the entity (4) by means of an artificial intelligence system (1) provides for:
- receiving at the input of the artificial intelligence system (1) a data group referred to the entity (4),
- calculating a plurality of probabilities of malfunction of the entity (4) based on the group of data received, each probability of malfunction of the entity (4) being referred to a respective future time interval.

11. System (1) for predicting a malfunction of an entity (4), said entity (4) being **characterized by** a plurality of parameters, the system (1) comprising:
- an interface module (11) configured to receive data relating to the said entity (4) and provide a malfunction prediction result;
- a data processing module (12) configured to acquire and process data relating to training entities and the data relating to said entity (4) provided to the interface module (11), and
- an artificial intelligence module (13) configured to execute an artificial intelligence algorithm using the data processed by the data processing module (12) to predict a probability of malfunction of the entity (4),
wherein the modules (11, 12, 13) of the system (1) are configured to implement the method according to any one of the preceding claims.

## Patentansprüche

1. Verfahren (100, 200) zur Vorhersage einer Fehlfunktion einer Entität (4), wobei die Entität (4) durch eine Vielzahl von Parametern gekennzeichnet ist, wobei das Verfahren (100, 200) bereitstellt:
Vorhersagen (200) einer Fehlfunktion der Entität (4) mittels eines künstlichen Intelligenzsystems (1), das einen künstlichen Intelligenzalgorithmus umfasst, der mit Daten bereitgestellt ist, die sich auf die Parameter der Entität (4) beziehen, wobei das künstliche Intelligenzsystem (1) mittels eines Trainingsdatensatzes trainiert wird,
der auf einer Vielzahl von Trainingsentitätsdaten basiert, die mit einer entsprechenden Vielzahl von Trainingsentitäten verbunden sind,
**dadurch gekennzeichnet, dass**
das künstliche Intelligenzsystem (1) den Trainingsdatensatz durch Durchführen der folgenden Schritte auswählt:
a. Erfassen (101-106) der Vielzahl von Trainingsentitätsdaten, wobei die Vielzahl von Trainingsentitätsdaten eine Vielzahl von Entitätsdatengruppen umfasst, wobei jede Entitätsdatengruppe Datenwerte umfasst, die sich auf
charakteristische Parameter der jeweiligen Trainingsentität beziehen, und wobei die Vielzahl von Trainingsentitäten eine Anzahl von Trainingsentitäten umfasst, die einer Fehlfunktion unterliegen, die gleich oder kleiner als 20%
der Anzahl von Trainingsentitäten ist, die keiner Fehlfunktion unterliegen;
b. mittels des untrainierten künstlichen Intelligenzalgorithmus Identifizieren von Trainingsentitäten, die einer Fehlfunktion unterliegen, und von Trainingsentitäten, die keiner Fehlfunktion unterliegen;
c. Zusammenstellen (107) einer Trainingsuntermenge durch Auswählen einer ersten Menge von Datengruppen, die mit den Entitäten, die einer Fehlfunktion unterliegen, verbunden sind, und einer zweiten Menge von Datengruppen, die mit Entitäten, die keiner Fehlfunktion unterliegen, verbunden sind, wobei die zweite Menge größer oder gleich der ersten Menge ist,
d. Verwenden der Trainingsuntermenge zum Trainieren (109) des künstlichen Intelligenzalgorithmus,
e. mittels des trainierten künstlichen Intelligenzalgorithmus, Bestimmen (112) einer Wahrscheinlichkeit, mit der jede Trainingsentität einer Fehlfunktion der Trainingsentitäten unterliegt, die mit Datengruppen der Trainingsuntermenge verbunden sind,
f. Bestimmen (113) einer Verteilung der Wahrscheinlichkeiten einer Fehlfunktion der Trainingsentitäten, die mit Datengruppen des Trainingsdatensatzes verbunden sind,
g. Zusammenstellen (114) des Trainingsdatensatzes durch Auswählen:
- aller Datengruppen von Trainingsentitäten mit einer Fehlerwahrscheinlichkeit, die höher als ein Schwellenwert ist, und
- einer Vielzahl von Datengruppen von Trainingsentitäten mit einer Fehlerwahrscheinlichkeit, die niedriger als der Schwellenwert ist, wobei für
jede Fehlerwahrscheinlichkeit, die niedriger als der Schwellenwert ist, die Vielzahl von Datengruppen eine entsprechende Anzahl von Datengruppen umfasst, die eine Funktion der Verteilung der Wahrscheinlichkeit ist.

2. Verfahren (100; 200) gemäß Anspruch 1, wobei Schritt g. des Zusammenstellens (113) des Trainingsdatensatzes durch Auswählen einer Vielzahl von Datengruppen von Trainingsentitäten mit einer Fehlerwahrscheinlichkeit, die niedriger als der Schwellenwert ist, bereitstellt:
- zufälliges Auswählen der Vielzahl von Datengruppen von Trainingsentitäten mit einer Fehlerwahrscheinlichkeit, die niedriger als der Schwellenwert ist, aus der Gesamtheit der Datengruppen von Trainingsentitäten mit einer Fehlerwahrscheinlichkeit, die niedriger als der bestimmte Schwellenwert ist.

3. Verfahren (100; 200) gemäß Anspruch 1 oder 2, wobei Schritt g. des Zusammenstellens (113) des Trainingsdatensatzes durch Auswählen einer Vielzahl von Datengruppen von Trainingsentitäten mit einer Fehlerwahrscheinlichkeit, die niedriger als der Schwellenwert ist, bereitstellt:
- Auswählen eines weiteren Schwellenwerts der Fehlerwahrscheinlichkeit, wobei der weitere Schwellenwert niedriger als der Schwellenwert ist,
- Auswählen einer ersten Menge von Datengruppen, die mit Entitäten verbunden sind, die eine Fehlerwahrscheinlichkeit aufweisen, die niedriger als der weitere Schwellenwert ist, und
- Auswählen einer zweiten Menge von Datengruppen, die mit Entitäten verbunden sind, die eine Fehlerwahrscheinlichkeit aufweisen, umfasst zwischen dem weiteren Schwellenwert und dem Schwellenwert.

4. Verfahren (100; 200) gemäß Anspruch 3, wobei die zweite Menge um einen Faktor m, der zwischen 0,2 und 0,6 umfasst ist, kleiner als die erste Menge ist.

5. Verfahren (100; 200) gemäß einem der vorhergehenden Ansprüche, wobei die Mehrzahl der Datengruppen von Trainingsentitäten mit einer Fehlerwahrscheinlichkeit, die niedriger als der ausgewählte Schwellenwert ist, gleich oder größer ist als die Gesamtheit der Datengruppen von Trainingsentitäten mit einer Fehlerwahrscheinlichkeit, die größer als ein Schwellenwert ist.

6. Verfahren (100; 200) gemäß Anspruch 5, wobei die Mehrzahl der Datengruppen von Trainingsentitäten mit einer Fehlerwahrscheinlichkeit, die niedriger als der ausgewählte Schwellenwert ist, zwischen dem Ein- und Vierfachen der Gesamtheit der Datengruppen von Trainingsentitäten mit einer Fehlerwahrscheinlichkeit, die höher als ein Schwellenwert ist, umfasst ist.

7. Verfahren (100; 200) gemäß einem der vorhergehenden Ansprüche, wobei der Schritt des Bestimmens (112) einer Verteilung der Wahrscheinlichkeiten einer Fehlfunktion der Trainingsentitäten des Trainingssatzes bereitstellt:
i. Definieren einer Vielzahl von Wahrscheinlichkeitsschwellenwerten;
ii. Bestimmen von mindestens einem zwischen einer Anzahl und einer Liste von Trainingsentitäten des Trainingsdatensatzes, deren Wahrscheinlichkeit einer Fehlfunktion niedriger oder gleich einem ausgewählten Schwellenwert ist, durch Ausführen des künstlichen Intelligenzsystems,
iii. Auswählen eines neuen Wahrscheinlichkeitsschwellenwertes aus der Vielzahl der Wahrscheinlichkeitsschwellenwerte,
iv. Wiederholen der Schritte i - iii, bis alle Wahrscheinlichkeitsschwellenwerte ausgewählt wurden, und
v. Berechnen der Verteilung der Wahrscheinlichkeiten von Fehlfunktionen der Trainingsentitäten des Trainingssatzes auf der Grundlage der Ergebnisse, die bei jeder Wiederholung von Schritt ii bereitgestellt werden.

8. Verfahren (100; 200) gemäß einem der vorhergehenden Ansprüche, wobei der Schritt des Bestimmens (112) einer Verteilung der Wahrscheinlichkeiten einer Fehlfunktion bereitstellt:
- Berechnen einer Vielzahl von Verteilungen der Wahrscheinlichkeiten einer Fehlfunktion der Trainingsentitäten des Trainingssatzes, wobei jede Verteilung der Wahrscheinlichkeiten einer Fehlfunktion der Trainingsentitäten des Trainingssatzes mittels Datengruppen der Trainingsentitäten, die sich auf das gleiche Zeitintervall beziehen, berechnet wird, und wobei der Schritt des Bestimmens (113) der Trainingsdaten bereitstellt:
- Auswählen der Entitätsdaten einer zweiten Teilmenge von Trainingsentitäten des Trainingsdatensatzes, so dass die zweite Teilmenge von vorhandenen Trainingsentitäten eine Vielzahl von Verteilungen der Wahrscheinlichkeiten einer Fehlfunktion aufweist, die gleich der Vielzahl von Verteilungen der für die Trainingsentitäten des Trainingsdatensatzes berechneten Wahrscheinlichkeiten einer Fehlfunktion sind.

9. Verfahren (100; 200) gemäß einem der vorhergehenden Ansprüche, wobei der Schritt des Vorhersagens (200) einer Fehlfunktion der Entität (4) mittels eines künstlichen Intelligenzsystems (1) die Verwendung eines maschinellen Lernalgorithmus bereitstellt, ausgewählt aus:
- Random Forest,
- XGBoost;
- Logistische Regression, und
- ein neuronales Netz.

10. Verfahren (100; 200) gemäß einem der vorhergehenden Ansprüche, wobei der Schritt des Vorhersagens (200) einer Fehlfunktion der Entität (4) mittels eines künstlichen Intelligenzsystems (1) bereitstellt:
- Empfangen einer Datengruppe, die sich auf die Entität (4) bezieht, am Eingang des künstlichen Intelligenzsystems (1),
- Berechnen einer Vielzahl von Wahrscheinlichkeiten einer Fehlfunktion der Entität (4) auf der Grundlage der Gruppe der empfangenen Daten, wobei jede Wahrscheinlichkeit einer Fehlfunktion der Entität (4) auf ein entsprechendes zukünftiges Zeitintervall bezogen ist.

11. System (1) zur Vorhersage einer Fehlfunktion einer Entität (4), wobei die Entität (4) durch eine Vielzahl von Parametern gekennzeichnet ist, wobei das System (1) umfasst:
- ein Schnittstellenmodul (11), das so konfiguriert ist, um Daten in Bezug auf die Entität (4) zu empfangen und ein Ergebnis einer Fehlfunktionsvorhersage bereitzustellen;
- ein Datenverarbeitungsmodul (12), das so konfiguriert ist, um Daten in Bezug auf Trainingsentitäten und die Daten in Bezug auf die Entität (4), die dem Schnittstellenmodul (11) bereitgestellt werden, zu erfassen und zu bearbeiten, und
- ein künstliches Intelligenzmodul (13), das so konfiguriert ist, um einen künstlichen Intelligenzalgorithmus unter Verwendung der vom Datenverarbeitungsmodul (12) verarbeiteten Daten auszuführen, um eine Wahrscheinlichkeit einer Fehlfunktion der Entität (4) vorherzusagen,
wobei die Module (11, 12, 13) des Systems (1) so konfiguriert sind, um das Verfahren gemäß einem der vorangehenden Ansprüche durchzuführen.

## Revendications

1. - Procédé (100, 200) pour prédire une défaillance d'une entité (4), ladite entité (4) étant **caractérisée par** une pluralité de paramètres, le procédé (100, 200) comprenant :
prédire (200) une défaillance de l'entité (4) au moyen d'un système d'intelligence artificielle (1) comprenant un algorithme d'intelligence artificielle, qui comporte des données relatives aux paramètres de l'entité (4), le système d'intelligence artificielle (1) étant entraîné au moyen d'un ensemble de données d'entraînement basé sur une pluralité de données d'entité d'entraînement associées à une pluralité correspondante d'entités d'entraînement,
**caractérisé par le fait que**
le système d'intelligence artificielle (1) sélectionne l'ensemble de données d'entraînement en mettant en oeuvre les étapes suivantes :
a. acquérir (101-106) la pluralité de données d'entité d'entraînement, la pluralité de données d'entité d'entraînement comprenant une pluralité de groupes de données d'entité, chaque groupe de données d'entité comprenant des valeurs de données relatives à des paramètres caractéristiques d'une entité d'entraînement respective, et la pluralité d'entités d'entraînement comprenant un nombre d'entités d'entraînement sujettes à une défaillance qui est égal ou inférieur à 20 % du nombre d'entités d'entraînement non sujettes à une défaillance ;
b. au moyen de l'algorithme d'intelligence artificielle non entraîné, identifier des entités d'entraînement sujettes à une défaillance et des entités d'entraînement non sujettes à une défaillance ;
c. composer (107) un sous-ensemble d'entraînement en sélectionnant une première quantité de groupes de données associés aux entités sujettes à une défaillance et une seconde quantité de groupes de données associés à des entités non sujettes à une défaillance, la seconde quantité étant supérieure ou égale à la première quantité ;
d. utiliser le sous-ensemble d'entraînement pour entraîner (109) l'algorithme d'intelligence artificielle ;
e. au moyen de l'algorithme d'intelligence artificielle entraîné, déterminer (112) une probabilité avec laquelle chaque entité d'entraînement est sujette à une défaillance des entités d'entraînement associées à des groupes de données du sous-ensemble d'entraînement ;
f. déterminer (113) une répartition des probabilités de défaillance des entités d'entraînement associées à des groupes de données de l'ensemble de données d'entraînement;
g. composer (113) l'ensemble de données d'entraînement en sélectionnant :
- tous les groupes de données d'entités d'entraînement avec une probabilité de défaillance supérieure à une valeur de seuil, et
- une pluralité de groupes de données d'entités d'entraînement avec une probabilité de défaillance inférieure à la valeur de seuil, où, pour chaque probabilité de défaillance inférieure à la valeur de seuil, ladite pluralité de groupes de données comprend une quantité respective de groupes de données, qui est fonction de la répartition de ladite probabilité.

2. - Procédé (100 ; 200) selon la revendication 1, dans lequel l'étape g. de composition (113) de l'ensemble de données d'entraînement en sélectionnant une pluralité de groupes de données d'entités d'entraînement avec une probabilité de défaillance inférieure à la valeur de seuil comprend :
- sélectionner de manière aléatoire la pluralité de groupes de données d'entités d'entraînement avec une probabilité de défaillance inférieure à la valeur de seuil parmi la totalité des groupes de données d'entités d'entraînement avec une probabilité de défaillance inférieure à la valeur de seuil déterminée.

3. - Procédé (100 ; 200) selon la revendication 1 ou 2, dans lequel l'étape g. de composition (113) de l'ensemble de données d'entraînement en sélectionnant une pluralité de groupes de données d'entités d'entraînement avec une probabilité de défaillance inférieure à la valeur de seuil comprend :
- sélectionner une autre valeur de seuil de la probabilité de défaillance, ladite autre valeur de seuil étant inférieure à la valeur de seuil,
- sélectionner une première quantité de groupes de données associés à des entités ayant une probabilité de défaillance inférieure à l'autre valeur de seuil, et
- sélectionner une seconde quantité de groupes de données associés à des entités ayant une probabilité de défaillance comprise entre l'autre valeur de seuil et la valeur de seuil.

4. - Procédé (100 ; 200) selon la revendication 3, dans lequel ladite seconde quantité est inférieure à la première quantité d'un facteur m compris entre 0,2 et 0,6.

5. - Procédé (100 ; 200) selon l'une quelconque des revendications précédentes, dans lequel la pluralité de groupes de données d'entités d'entraînement avec une probabilité de défaillance inférieure à la valeur de seuil sélectionnée est égale ou supérieure à la totalité des groupes de données d'entités d'entraînement avec une probabilité de défaillance supérieure à une valeur de seuil.

6. - Procédé (100 ; 200) selon la revendication 5, dans lequel la pluralité de groupes de données d'entités d'entraînement avec une probabilité de défaillance inférieure à la valeur de seuil sélectionnée est comprise entre une et quatre fois la totalité des groupes de données d'entités d'entraînement avec une probabilité de défaillance supérieure à une valeur de seuil.

7. - Procédé (100 ; 200) selon l'une quelconque des revendications précédentes, dans lequel l'étape de détermination (112) d'une répartition des probabilités de défaillance des entités d'entraînement de l'ensemble d'entraînement comprend :
i. définir une pluralité de valeurs de seuil de probabilité,
ii. déterminer au moins l'un parmi un nombre et une liste d'entités d'entraînement de l'ensemble de données d'entraînement dont la probabilité de défaillance est inférieure ou égale à une valeur de seuil sélectionnée, en exécutant le système d'intelligence artificielle,
iii. sélectionner une nouvelle valeur de seuil de probabilité parmi ladite pluralité de valeurs de seuil de probabilité,
iv. itérer les étapes i à iii, jusqu'à ce que toutes les valeurs de seuil de probabilité aient été sélectionnées, et
v. calculer la répartition des probabilités de défaillance des entités d'entraînement de l'ensemble d'entraînement sur la base des résultats fournis à chaque itération de l'étape ii.

8. - Procédé (100 ; 200) selon l'une quelconque des revendications précédentes, dans lequel l'étape de détermination (112) d'une répartition des probabilités de défaillance comprend :
- calculer une pluralité de répartitions des probabilités de défaillance des entités d'entraînement de l'ensemble d'entraînement, chaque répartition des probabilités de défaillance des entités d'entraînement de l'ensemble d'entraînement étant calculée au moyen de groupes de données des entités d'entraînement se rapportant au même intervalle de temps, et l'étape de détermination (113) des données d'entraînement comprenant :
- sélectionner les données d'entité d'un second sous-ensemble d'entités d'entraînement de l'ensemble de données d'entraînement de telle sorte que le second sous-ensemble d'entités d'entraînement présente une pluralité de répartitions des probabilités de défaillance égales à la pluralité de répartitions des probabilités de défaillance calculées pour les entités d'entraînement de l'ensemble de données d'entraînement.

9. - Procédé (100 ; 200) selon l'une quelconque des revendications précédentes, dans lequel l'étape de prédiction (200) d'une défaillance de l'entité (4) au moyen d'un système d'intelligence artificielle (1) comprend l'utilisation d'un algorithme d'apprentissage automatique, choisi parmi :
- Forêt Aléatoire,
- XGBoost ;
- Régression Logistique, et
- un réseau neuronal.

10. - Procédé (100;200) selon l'une quelconque des revendications précédentes, dans lequel l'étape de prédiction (200) d'une défaillance de l'entité (4) au moyen d'un système d'intelligence artificielle (1) comprend :
- recevoir, à l'entrée du système d'intelligence artificielle (1), un groupe de données se rapportant à l'entité (4),
- calculer une pluralité de probabilités de défaillance de l'entité (4) sur la base du groupe de données reçu, chaque probabilité de défaillance de l'entité (4) se rapportant à un intervalle de temps futur respectif.

11. - Système (1) pour prédire une défaillance d'une entité (4), ladite entité (4) étant **caractérisée par** une pluralité de paramètres, le système (1) comprenant :
- un module d'interface (11) configuré pour recevoir des données relatives à ladite entité (4) et fournir un résultat de prédiction de défaillance ;
- un module de traitement de données (12) configuré pour acquérir et traiter des données relatives à des entités d'entraînement et les données relatives à ladite entité (4) fournies au module d'interface (11), et
- un module d'intelligence artificielle (13) configuré pour exécuter un algorithme d'intelligence artificielle en utilisant les données traitées par le module de traitement de données (12) pour prédire une probabilité de défaillance de l'entité (4),
les modules (11, 12, 13) du système (1) étant configurés pour mettre en oeuvre le procédé selon l'une quelconque des revendications précédentes.
